# EUROPÄISCHE PATENTSCHRIFT

(11) **EP 1 600 622 B1**
(45) Veröffentlichungstag und Bekanntmachung des Hinweises auf die Patenterteilung: **07.12.2016**
(21) Anmeldenummer: 05450069.9
(22) Anmeldetag: 14.04.2005
(51) Int. Cl.: F02M 35/00, F02B 37/16

(54) **Vorrichtung und Verfahren zur Versorgung eines Verbrennungsmotors mit einem konditionierten Verbrennungsgas**
Apparatus and method for supplying an internal combustion engine with a conditioned combustible gas
Dispositif et procédé d'alimentation d'un moteur à combustion interne avec un gaz combustible conditionné

(30) Priorität: 28.05.2004 AT 9372004
(43) Veröffentlichungstag der Anmeldung: 30.11.2005
(73) Patentinhaber: KRISTL, SEIBT & CO. GESELLSCHAFT M.B.H., A-8052 Graz (AT)
(72) Erfinder: Pircher, Stefan, 8054 Graz (AT); Rossegger, Wilfried, 8052 Graz (AT); Rossegger, Wolfram, 8042 Graz (AT); Taucher, René, 8430 Leibnitz (AT)
(74) Vertreter: Sonn & Partner Patentanwälte

(56) Entgegenhaltungen:
- WO-A-02/42730
- US-A- 5 167 146
- US-A- 5 297 047
- US-A- 6 112 523

## Beschreibung

Die Erfindung betrifft eine Vorrichtung zur Versorgung eines vorzugsweise auf einem Prüfstand angeordneten Verbrennungsmotors mit einem konditionierten Verbrennungsgas, insbesondere Luft, wobei eine ein Gebläse aufweisende Versorgungs- bzw. Saugleitung zum Zuführen des Vebrennungsgases mit einer vorbestimmten Temperatur und einem vorbestimmten Feuchtegehalt zum Verbrennungsmotor vorgesehen ist und in der Versorgungs- bzw. Saugleitung ein Drucksensor zum Erfassen des Motoransaugdrucks vorgesehen ist, sowie ein Verfahren zur Versorgung eines vorzugsweise auf einem Prüfstand angeordneten Verbrennungsmotors mit einem konditionierten Verbrennungsgas, insbesondere Luft, wobei das Vebrennungsgas mit einer vorbestimmten Temperatur und einem vorbestimmten Feuchtegehalt dem Verbrennungsmotor über eine Versorgungs- bzw. Saugleitung zugeführt wird, und in Abhängigkeit von einem in der Versorgungs- bzw. Saugleitung erfassten Druck der Druck des Verbrennungsgases beim Eintritt in den Verbrennungsmotor geregelt wird.

Das Betriebsverhalten von Verbrennungsmotoren wird insbesondere im Hinblick auf die abgegebenen Leistung sowie die Abgasemissionen und den Kraftstoffverbrauch durch den Zustand des zur Verfügung stehenden Verbrennungsgases, d.h. insbesondere Verbrennungsluft, der durch die Temperatur, den absoluten Druck und den absoluten Feuchtegehalt gekennzeichnet ist, beeinflusst. Druck und Temperatur bestimmen die in den Brennraum gelangende Luftmasse, welche für die Verbrennung von Kraftstoff zur Verfügung steht, und haben somit einen direkten Einfluss auf die Motorleistung, den Kraftstoffverbrauch und die Schadstoffemissionen.

Bisher wurden diese Einflüsse durch eine Korrekturrechnung ausgeglichen und die gemessenen Werte von Leistung und Schadstoffkonzentration auf Normalbedingungen umgerechnet; bei den bereits sehr geringen Rohemissionen hochentwickelter Motoren gestaltet sich dies jedoch zunehmend schwieriger, da die Korrekturformeln weitgehend auf empirischen Werten beruhen und keine ausreichende Genauigkeit mehr gewährleisten.

Diesem Umstand wurde nunmehr in der Abgas-Gesetzgebung dahingehend Rechnung getragen, dass für Nutzfahrzeuge anstelle der Korrekturrechnung die Konstanthaltung des Ansaugluftzustandes gefordert wird und die Motoren während der gesetzlichen Prüfläufe für die Homologation mit entsprechend geregelter Luft versorgt werden müssen. Da die gesetzlichen Prüfläufe in vielen Ländern, insbesondere aber im EU-Raum, instationäre (transiente) Phasen enthalten, stellt die Erfüllung dieser Forderung eine erhebliche Herausforderung an die Regelungstechnik.

Aus der US 2003/0084712 A1 ist bereits ein Höhensimulator zur Leistungsmessung einer Verbrennungskraftmaschine bekannt, bei welcher eine Druckregelvorrichtung zur Kontrolle des Einlassdrucks und eine Druckregelvorrichtung zur Kontrolle des Auslassdrucks vorgesehen sind. Vor der Druckregelvorrichtung ist einlassseitig eine Luftkonditioniereinheit zum Konditionieren der Luftfeuchtigkeit, der Temperatur und des Luftdrucks vorgesehen. Um den Luftdruck, der von der Luftkonditioniereinheit geliefert wird, zu reduzieren, ist ein Drosselventil vor dem Einlass in die Verbrennungskraftmaschine angeordnet. Das Druckregelvorrichtung wird hierbei in Abhängigkeit von einem gewählten Soll-Wert und einem von einem Druckumwandler generierten Signal angesteuert, wobei die Druckregelvorrichtung das Drosselventil derart manipuliert, dass der von dem Druckwandler erfasste Druck innerhalb vorgegebener Grenzen des Soll-Werts gehalten wird. Mit Hilfe des Drosselventils kann jedoch nur eine Simulation eines konstanten Umgebungsdruck erzielt werden, nicht jedoch eine dynamische Druckregelung zum Konstanthalten des Eintrittsdrucks bei einem variablen Verbrennungasverbrauch.

Weiters ist aus der WO 02/42730 A2 bereits ein Verfahren zur Versorgung eines Verbrennungmotors mit konditioniertem Verbrennungsgas bekannt, bei dem von einer Versorgungsleitung eine Saugleitung abgezweigt ist, über welche sich der Verbrennungsmotor die benötigte Menge an Verbrennungsgas abzweigt. Hierbei ist es jedoch erforderlich, dass auch eine Abgasleitung an der Abgasseite des Verbrennungsmotors vorgesehen ist, welche wiederum in die Versorgungsleitung mündet, so dass sich eine durchgehende BypassLeitung ergibt, in welcher der Verbrennungsmotor angeordnet ist. Ein derartiger Aufbau ist jedoch aufwendig und zudem können allfällige Rückwirkungen von Druckpulsationen aus der Abgasleitung nicht ausgeschlossen werden.

Zudem ist beispielsweise noch aus der DE 40 15 818 C2 ein Prüfstand für eine Brennkraftmaschine bekannt, bei welcher in der Abgasleitung ein Regelventil vorgesehen ist, über welches in dem in Strömungsrichtung davorliegenden Abschnitt der Abgasleitungen ein mit dem Druck der zugeführten Verbrennungsluft übereinstimmender Abgasdruck eingeregelt werden soll. Ein derartiger Aufbau ist jedoch ebenso aufwendig, und zudem kann die Gefahr von Rückwirkungen von Pulsationen und Rohrwiderständen nicht ausgeschlossen werden. Weiters ist auch eine geregelte Verbrennungsluftversorgung mehrerer Prüfstände bzw. Verbrennungsmotoren mit einer derartigen Vorrichtung nicht möglich.

Aus der DE 101 05 401 A1 ist noch eine Konditionier-vorrichtung für eine andersartige Heizfeuerungsstätte bekannt, bei der die Zuluft für die Heizfeuerungsstätte zunächst mittels einer Temperatureinstelleinrichtung und einer Feuchtigkeits-einstelleinrichtung konditioniert wird. In der Zuführungsleitung ist ein Ventil angeordnet, mit dessen Hilfe der Druck in der Zuluft einstellbar ist. Dem Ventil ist eine Druckmessstelle zugeordnet, die stromab des Ventils in der Anschlussleitung bzw. im Zulufteinlass angeordnet ist. Der Heizfeuerungsstätte ist zudem ein Gebläse zugeordnet, mit dem die in der Heizfeuerungsstätte benötigte Zuluft angesaugt wird, wodurch der Unterdruck im Bereich des Zulufteinlasses bestimmt wird. Bei der Heizfeuerungsstätte ist somit der Unterdruck im Bereich der Anschlussleitung von dem Gebläse abhängig, so dass kein variabler Gasverbrauch und somit von einem Vebrennungsmotor grundsätzlich verschiedenen Bedingungen vorliegen.

Ziel der vorliegenden Erfindung ist somit eine Vorrichtung bzw. ein Verfahren der eingangs angeführten Art zu schaffen, bei welcher der Druck des Verbrennungsgases im Ansaugbereich der Verbrennungsmaschine, die einen variablen Verbrennungasverbrauch aufweist, konstant gehalten wird, wobei allfällige Rückwirkungen von der Abgasseite der Verbrennungsmaschine vermieden werden sollen.

Dies wird bei der Vorrichtung der eingangs angeführten Art dadurch erzielt, dass eine dynamische Druckregelungseinheit mit einem Abströmventil zur Ableitung von überschüssigem Verbrennungsgas in der Versorgungs- bzw. Saugleitung vorgesehen ist, wobei die dynamische Druckregelungseinheit in Abhängigkeit von dem vom Drucksensor erfassten Motoransaugdruck derart geregelt wird, dass der Druck des Verbrennungsgases beim Eintritt in den Verbrennungsmotor konstant ist. Durch das Vorsehen einer dynamischen Druckregelungseinheit mit einem Abströmventil in der Versorgung- bzw. Saugleitung des Verbrennungsmotors kann somit auf einfache Weise überschüssiges Verbrennungsgas vor dem Eintritt in den Verbrennungsmotor abgeleitet werden und somit der Druck des Verbrennungsgases auch bei einem variablen Vebrennungsgasverbrauch des Verbrennungsmotors beim Eintritt in den Verbrennungsmotor konstant gehalten werden. Das Vorsehen einer Bypassleitung, in welcher die Verbrennungsmaschine angeordnet ist, ist somit nicht erforderlich. Demzufolge ergibt sich ein konstruktiv einfacher Aufbau, bei dem lediglich ein saugseitiger Anschluss des Verbrennungsmotors vorgesehen ist, so dass Rückwirkungen von Druckpulsationen von der Abgasseite des Verbrennungsmotors keinen Einfluss auf die Druckregelung haben können. Somit kann insbesondere auch bei einem variablen Verbrauch des Verbrennungsgases durch den Verbrennungsmotor der Druck des Verbrennungsgases beim Eintritt in den Verbrennungsmotor innerhalb der geforderten Toleranzgrenzen von +/- 3 mbar konstant gehalten werden.

Wenn das Abströmventil einen in einem Zylinder verschieblich gelagerten Steuerkolben aufweist, der eine Abströmöffnung in Abhängigkeit von dem erfassten Motoransaugdruck in der Versorgungs- bzw. Saugleitung abschließt, ist ein hochdynamisches Abströmventil gegeben, welches faktisch ohne Verzögerung in Abhängigkeit von dem vom Drucksensor erfassten Motoransaugdruck die Abströmöffnung entsprechend abschließt.

Um eine möglichst rasche Bewegung des Steuerkolbens in Abhängigkeit von dem erfassten Motoransaugdruck zu erzielen, ist es günstig, wenn eine Rückseite des Steuerkolbens von einem Druck in einer Steuerkammer, der in Abhängigkeit von dem in der Versorgungs- bzw. Saugleitung erfassten Motoransaugdruck geregelt ist, und eine Vorderseite des Steuerkolbens vom Druck in der Versorgungs- bzw. Saugleitung beaufschlagt sind.

Insbesondere ist es hierbei von Vorteil, wenn der Steuerkammer ein Druckregler zugeordnet ist, der in Abhängigkeit von in der Versorgungs- bzw. Saugleitung erfasstem Motoransaugdruck geregelt ist, da somit beispielsweise bei einer plötzlichen Abnahme des Verbrauchs an Verbrennungsgas, wodurch der erfasste Motoransaugdruck in der Versorgungs- bzw. Saugleitung geringfügig ansteigt und der Steuerkolben somit im Zylinder zurückgedrängt wird, die Zuführung von einem Steuergas, insbesondere Steuerluft, in die Steuerkammer über ein praktisch verzugsfreies, automatisches Schließen des Druckreglers gestoppt werden kann.

Weiters ist es für eine entsprechende Anpassung des Drucks in der Steuerkammer und somit für eine möglichst dynamische Regelung des Abströmventils günstig, wenn die Steuerkammer ein Drosselventil aufweist, welches durch eine einstellbare Abströmrate das Ansprechverhalten des Steuerkolbens unterstützt.

Um die Reibung zwischen dem Steuerkolben und dem Zylinder zu verringern und die Dynamik der Druckregelung zu erhöhen, ist es von Vorteil, wenn zwischen dem Steuerkolben und dem Zylinder ein Leckstrom eines in der Steuerkammer vorgesehenen Druckmediums, vorzugsweise Luft, vorgesehen ist.

Weiters ist es für eine dynamische Druckregelung von Vorteil, wenn der Steuerkolben eine Masse von höchstens 400 g, vorzugsweise höchstens 300 g aufweist.

Anstelle des Abströmventils der vorstehend beschriebenen Art ist es jedoch ebenfalls möglich, dass als dynamische Druckregelungseinheit ein Drosselorgan, inbesondere eine Drosselklappe, mit einem in der Versorgungs- bzw. Saugleitung vor dem Drosselorgan angeordneten und zum Drosselorgan komplementär angesteuerten Abströmventil vorgesehen ist. Ebenso wie bereits im Zusammenhang mit dem vorstehend beschriebenen hochdynamischen Abströmventil ausgeführt, kann über das dynamische Drosselorgan sichergestellt werden, dass der Druck des Verbrennungsgases beim Eintritt in den Verbrennungsmotor im Bereich der zulässigen Toleranzen konstant gehalten wird, wobei wiederum über das komplementär angesteuerte Abströmventil das überschüssige vom Verbrennungsmotor nicht konsumierte Verbrennungsgas an die Umgebung abgeleitet werden kann.

Für eine dynamische Regelung des Drosselorgans ist es von Vorteil, wenn das Drosselorgan eine über einen dynamischen hydraulischen/elektrischen, pneumatischen, magnetischen und/oder durch Schwerkraft betriebenen Stellantrieb betätigbare Drosselklappe aufweist.

Für eine besonders hohe Dynamik der Druckregelung und somit eine besonders hohe Regelgenauigkeit ist es weiters günstig, wenn zur Regelung des Drosselorgans eine Regeleinheit vorgesehen ist, deren Stellgröße in Abhängigkeit vom Ist/Sollwert-Vergleich des Motoransaugdrucks, der Drosselklappenstellung, der Drehzahl, des Drehmoments, bzw. der zeillichen Änderung der Drosselklappenstellung, der Drehzahl, bzw. des Drehmoments bestimmt wird.

Um das konditionierte Verbrennungsgas simultan für mehrere Vebrennungsmotoren zu nutzen, ist es günstig, wenn an die Versorgungs- bzw. Saugleitung zumindest zwei Verbrennungsmotoren angeschlossen sind.

Wenn jedem Verbrennungsmotor eine dynamische Druckregelungseinheit zugeordnet ist, kann jeweils der Druck des den einzelnen Verbrennungsmotoren zugeführten Verbrennungsgases unabhängig voneinander geregelt werden, so dass die Verbrennungsmotoren jeweils unterschiedliche Druckanforderungen aufweisen können.

Das Verfahren der eingangs angeführten Art ist dadurch gekennzeichnet, dass dass zur dynamischen Regelung des Drucks des Verbrennungsgases überschüssiges Verbrennungsgas abgeleitet wird, so dass der Druck des Verbrennungsgases beim Eintritt in den Verbrennungsmotor konstant gehalten wird. Vorteilhafte Weiterbildungen dieses Verfahrens sind in den Ansprüchen 14 bis 16 gekennzeichnet. Zwecks Vermeidung von Wiederholungen wird bezüglich der vorteilhaften Effekte des Verfahrens sowie der vorteilhaften Weiterbildungen auf vorstehende in Zusammenhang mit der korrespondierenden erfindungsgemäßen Vorrichtung vorgebrachte Ausführungen verwiesen.

Die Erfindung wird nachstehend anhand von in der Zeichnung dargestellten bevorzugten Ausführungsbeispielen, auf die sie jedoch nicht beschränkt werden soll, noch weiter erläutert. Im Einzelnen zeigen in der Zeichung:
Fig. 1 eine schematische Abbildung der dynamischen Druckregelung eines Verbrennungsmotors mit einem Abströmventil; und
Fig. 2 eine schematische Abbildung einer dynamischen Druckregelung des Verbrennungsmotors mit einem Drosselorgan.

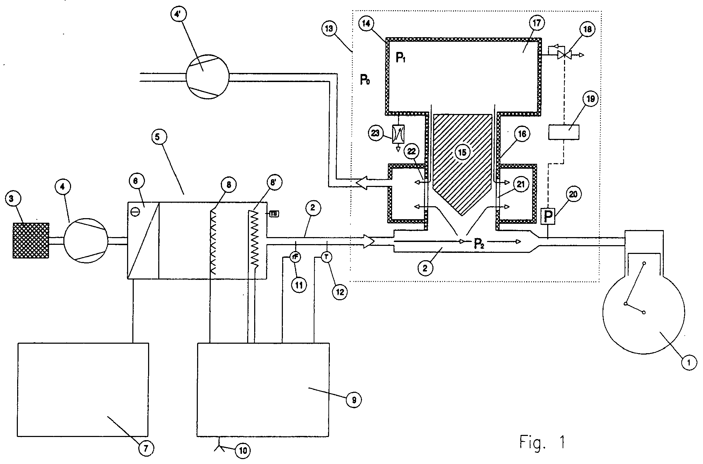

In Fig. 1 ist ein Verbrennungsmotor 1 ersichtlich, der ausschließlich an seiner Saugseite an eine Versorgungs- bzw. Ansaugleitung 2 angeschlossen ist, über welche ein temperatur- und feuchtigkeitskonditioniertes Verbrennungsgas dem Verbrennungsmotor 1 zugeführt wird. Zur Aufbereitung der dem Verbrennungsmotor 1 über die Versorgungs- bzw. Ansaugleitung 2 zugeführten Verbrennungsluft ist ein Hochdruckgebläse 4 vorgesehen, dem ein Filter 3 vorgeschaltet ist, über welches Umgebungsluft als Verbrennungsgas angesaugt wird und dem Verbrennungsmotor 1 über die versorgungs- bzw. Ansaugleitung 2 zugeführt wird.

In der Versorgungs- bzw. Ansaugleitung 2 ist zunächst eine Luftaufbereitungsstrecke 5 vorgesehen, in welcher zunächst ein Kühler 6 vorgesehen ist, der von einem als direkter Verdampfer arbeitenden Kälteaggregat 7 angespeist wird. Anschließend sind Dampfinjektoren 8 vorgesehen, welche von einem Dampferzeuger 9 angespeist werden, wobei der Dampferzeuger 9 an eine Frischwasserversorgung 10 angeschlossen ist. Der vom Dampferzeuger 9 bereitgestellte Dampf wird in Abhängigkeit von einem Sensor 11 zur Ermittlung der absoluten/relativen Luftfeuchtigkeit und einem Temperatursensor 12 aufbereitet, wobei auch ein elektrisches Heizregister 8' in Abhängigkeit der ermittelten Werte geregelt wird.

In der Versorgungsleitung 2 ist anschließend an die Luftaufbereitungsstrecke 5 an einer möglichst motornahen Position ein als Druckregelungseinheit 13 ein dynamisches Abströmventil 14 vorgesehen, über das überschüssige Luft an die Umgebung abgegeben wird, so dass der Druck beim Eintritt in den Verbrennungsmotor 1 auf dem geforderten Wert konstant gehalten werden kann. Weiters wird hierdurch der Arbeitspunkt in der Luftaufbereitungsstrecke 5 konstant gehalten, wodurch eine sehr hohe Regelgenauigkeit gewährleistet wird. Hierzu ist ein Steuerkolben 15 in einem Zylinder 16 verschieblich gelagert, der an seiner Rückseite mit dem Druck einer Steuerkammer 17 und an seiner Vorderseite mit dem Druck p2 in der Versorgungs- bzw. Saugleitung 2 beaufschlagt wird. Der Druck p1 in der Steuerkammer 17 wird durch einen Druckregler 18 geregelt, der wiederum von einem Regler 19 in Abhängigkeit von dem über einen Drucksensor 20 erfassten Motoransaugdruck geregelt wird.

Sofern der Luftverbrauch des Verbrennungsmotors 1 durch eine Lastrampe im Versuchslauf schlagartig zunimmt, wird der Steuerkolben 15 somit faktisch verzögerungsfrei nachgeführt und eine Abströmöffnung 21 in dem Zylinder 16 durch den Steuerkolben 17 weiter geschlossen, wodurch der Druck in der Versorgungs- bzw. Saugleitung 2 auch bei variablem Luftverbrauch des Verbrennungsmotors 1 im Wesentlichen konstant gehalten wird. Tests haben gezeigt, dass somit eine Regelgenauigkeit von +/- 1,5 mbar erzielt werden kann, welche somit weit innerhalb der zulässigen Toleranz von +/- 3 mbar liegt.

Bei einer plötzlichen Abnahme des Luftverbrauchs steigt der Druck p2 in der Versorgungs- bzw. Saugleitung geringfügig an, so dass der Steuerkolben 15 zurückgedrängt wird und einen entsprechend größerer Querschnitt der Abströmöffnung 21 freigegeben wird.

Um die Reibung zwischen dem Steuerkolben 15 und dem Zylinder 16 möglichst gering zu halten und somit die Dynamik der Druckregelung zu erhöhen, wird ein schematisch dargestellter Leckstrom 22 permanent aus der Steuerkammer 17 zwischen Kolben 15 und Zylinder 16 vorbeigeführt. Zur Ableitung überschüssiger Steuerluft ist ein Drosselventil 23 vorgesehen. Durch die Regelung der Steuerluftzuführung mit Hilfe des elektronischen Steuerdruckreglers 18, der durch den Drucksensor 20 zur Erfassung des Motorsansaugdrucks angesteuert wird, können Abweichungen des Steuerdrucks p1 in der Steuerkammer 17 bedingt durch Leistungsverluste bei unterschiedlichem Verbrauch des Verbrennungsmotors 1 ausgeglichen werden. Demzufolge ergibt sich eine dynamische Druckregelung, bei welcher insbesondere mit Hilfe des Druckreglers 18, dem Drosselventil 23 und mit Hilfe des Leckstroms 22 eine besonders rasche Bewegung des Steuerkolbens 15 gewährleistet ist.

Anstelle bzw. zusätzlich zum Hochdruckgebläse 4 kann auch an die Abströmöffnung 21 ein Sauggebläse 4' angeschlossen sein, so dass die Regelung nicht nur im Überdruckbetrieb sondern auch im Underdruckbetrieb durchgeführt werden kann.

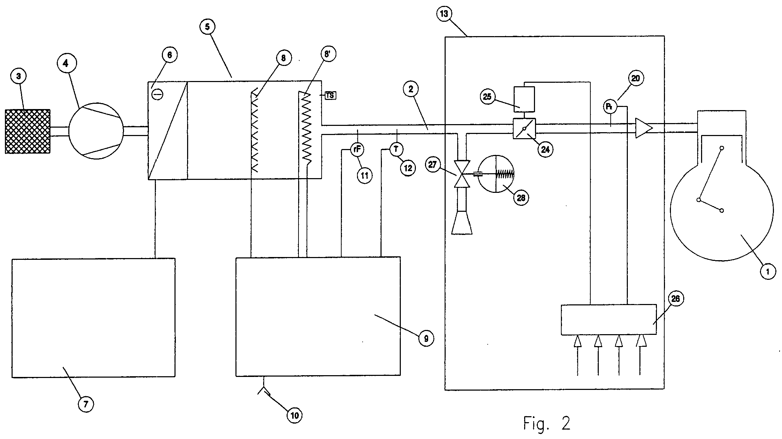

In Fig. 2 ist ebenfalls ein Verbrennungsmotor 1 gezeigt, der an seiner Saugseite an eine Versorgungs- bzw. Saugleitung 2 angeschlossen ist, über welche er mit feuchtigkeits- und temperaturkonditionierter Luft als Verbrennungsgas versorgt wird.

Ebenso wie bei dem Ausführungsbeispiel gemäß Fig. 1 sind ein Hochdruckgebläse 4, dem ein Luftfilter 3 vorgeschaltet ist, sowie eine Luftaufbereitungsstrecke 5 vorgesehen, welcher jener des Ausführungsbeispiels gemäß Fig. 1 entspricht. Die Druckregelungseinheit 13 umfasst hier jedoch eine Drosselklappe 24, die von einem Servo- bzw. servohydraulischen Stellantrieb 25 betätigt wird, so dass jene Luftmenge zum Verbrennungsmotor 1 hin freigegeben wird, die erforderlich ist um den Motoransaugdruck p2 auf dem geforderten Sollwert konstant zu halten.

Der Stellantrieb 25 wird hierbei von einem Prozessorregler 26 angesteuert, der einen Sollwert für den Motoransaugdruck von p2 sowie den über den Drucksensor 20 ermittelten Motoransaugistwert p2 berücksichtigt. Für eine Verbesserung der Regelgüte berücksichtigt der Prozessorregler 26 zudem die Drosselklappenstellung, die Drehzahl und das Drehmoment des Verbrennungsmotors 1 sowie die zeitliche Änderung dieser Größen (sog. Kaskadierung).

Zur weiteren Unterstützung der Regelqualität umfasst die Druckregelungseinheit 13 ein Abströmventil 27, über das der Vordruck vor der Drosselklappe 24 geregelt wird und welches komplementär zu der Drosselklappe 24 angesteuert wird, so dass die überschüssige vom Motor nicht konsumierte Verbrennungsluft an die Umgebung abgeleitet wird. Das Abströmventil 27 weist hierbei ein Antriebselement 28 auf, das beispielsweise Federkraft- oder Motor-betrieben sein kann.

Mit der Drosselklappe 24 ist es somit ebenfalls möglich in Abhängigkeit von dem vom Drucksensor 20 erfassten Motoransaugdruck den Druck der Verbrennungsluft beim Eintritt in den Verbrennungsmotor 1 im Wesentlichen konstant zu halten, d.h innerhalb der geforderten Toleranz von +/- 3 zu halten, ohne dass hierfür der Motor auch abgasseitig an eine mit der Versorgungs- bzw. Saugleitung in Verbindung stehende Leitung angeschlossen werden muss.

Weiters ist durch das Vorsehen derartiger Druckregelungseinheiten 13 möglich, lediglich eine einzige zentrale Luftkonditionierung für mehrere Prüfstände bzw. Verbrennungsmotoren vorzusehen. Durch die Zuordnung einer eigenen Druckregelungseinheit 13 zu jedem Prüfstand bzw. Verbrennunsmotor 1, können sodann Druckunterschiede an den Prüfständen bzw. Verbrennunsmotoren, verursacht durch unterschiedliche Leitungsführung und -längen, ausgeglichen werden.

## Patentansprüche

1. Vorrichtung zur Versorgung eines vorzugsweise auf einem Prüfstand angeordneten Verbrennungsmotors (1) mit einem konditionierten Verbrennungsgas, insbesondere Luft, wobei eine ein Gebläse (4) aufweisende Versorgungs- bzw. Saugleitung (2) zum Zuführen des Vebrennungsgases mit einer vorbestimmten Temperatur und einem vorbestimmten Feuchtegehalt zum Verbrennungsmotor (1) vorgesehen ist und in der Versorgungs- bzw. Saugleitung (2) ein Drucksensor (20) zum Erfassen des Motoransaugdrucks vorgesehen ist, dadurch gekennzeichent, dass eine dynamische Druckregelungseinheit (13) mit einem Abströmventil (14, 27) zur Ableitung von überschüssigem Verbrennungsgas in der Versorgungs- bzw. Saugleitung (2) vorgesehen ist, wobei die dynamische Druckregelungseinheit (13) in Abhängigkeit von dem vom Drucksensor (20) erfassten Motoransaugdruck derart geregelt wird, dass der Druck des Verbrennungsgases beim Eintritt in den Verbrennungsmotor (1) konstant ist.

2. Vorrichtung nach Anspruch 1, **dadurch gekennzeichnet, dass** das Abströmventil (14) einen in einem Zylinder (16) verschieblich gelagerten Steuerkolben (15) aufweist, der eine Abströmöffnung (21) in Abhängigkeit von dem erfassten Motoransaugdruck in der Versorgungs- bzw. Saugleitung (2) abschließt.

3. Vorrichtung nach Anspruch 2, **dadurch gekennzeichnet, dass** eine Rückseite des Steuerkolbens (15) von einem Druck in einer Steuerkammer (17), der in Abhängigkeit von dem in der Versorgungs- bzw. Saugleitung (2) erfassten Motoransaugdruck geregelt ist, und eine Vorderseite des Steuerkolbens (15) vom Druck in der Versorgungs- bzw. Saugleitung (2) beaufschlagt sind.

4. Vorrichtung nach Anspruch 3, **dadurch gekennzeichnet, dass** der Steuerkammer (17) ein Druckregler (18) zugeordnet ist, der in Abhängigkeit von in der Versorgungs- bzw. Saugleitung erfassten Motoransaugdruck (2) geregelt ist.

5. Vorrichtung nach Anspruch 3 oder 4, **dadurch gekennzeichnet, dass** die Steuerkammer (17) ein Drosselventil (23) aufweist.

6. Vorrichtung nach einem der Ansprüche 2 bis 5, **dadurch gekennzeichnet, dass** zwischen dem Steuerkolben (15) und dem Zylinder (16) ein Leckstrom (22) eines in der Steuerkammer (17) vorgesehenen Druckmediums, vorzugsweise Luft, vorgesehen ist.

7. Vorrichtung nach einem der Ansprüche 2 bis 6, **dadurch gekennzeichnet, dass** der Steuerkolben (15) eine Masse von höchstens 400 g, vorzugsweise höchstens 300 g aufweist.

8. Vorrichtung nach Anspruch 1, **dadurch gekennzeichnet, dass** die dynamische Druckregelungseinheit (13) ein Drosselorgan, inbesondere eine Drosselklappe (24), aufweist, wobei in der Versorgungs- bzw. Saugleitung (2) vor dem Drosselorgan das zum Drosselorgan komplementär angesteuerte Abströmventil (27) angeordnet ist.

9. Vorrichtung nach Anspruch 8, **dadurch gekennzeichnet, dass** das Drosselorgan eine über einen dynamischen hydraulischen/elektrischen, pneumatischen, magnetischen und/oder durch Schwerkraft betriebenen Stellantrieb (25) betätigbare Drosselklappe (24) aufweist.

10. Vorrichtung nach Anspruch 9, **dadurch gekennzeichnet, dass** zur Regelung der Drosselklappe (24) eine Regeleinheit (26) vorgesehen ist, deren Stellgröße in Abhängigkeit vom Ist/SollwertVergleich des Motoransaugdrucks, der Drosselklappenstellung, der Drehzahl, bzw. des Drehmoments, und/oder der zeitlichen Änderung der Drosselklappenstellung, der Drehzahl, bzw. des Drehmoments bestimmt wird.

11. Vorrichtung nach einem der Ansprüche 1 bis 10, **dadurch gekennzeichnet, dass** an die Versorgungs - bzw. Saugleitung (2) zumindest zwei Verbrennungsmotoren (1) angeschlossen sind.

12. Vorrichtung nach Anspruch 11, **dadurch gekennzeichnet, dass** jedem Verbrennungsmotor (1) eine dynamische Druckregelungseinheit (14, 24) zugeordnet ist.

13. Verfahren zur Versorgung eines vorzugsweise auf einem Prüfstand angeordneten Verbrennungsmotors (1) mit einem konditionierten Verbrennungsgas, insbesondere Luft, wobei das Vebrennungsgas mit einer vorbestimmten Temperatur und einem vorbestimmten Feuchtegehalt dem Verbrennungsmotor (1) über eine Versorgungs- bzw. Saugleitung (2) zugeführt wird, und in Abhängigkeit von einem in der Versorgungs- bzw. Saugleitung (2) erfassten Druck der Druck des Verbrennungsgases beim Eintritt in den Verbrennungsmotor geregelt wird, **dadurch gekennzeichnet, dass** zur dynamischen Regelung des Drucks des Verbrennungsgases überschüssiges Verbrennungsgas aus der Versorgungs- bzw. Saugleitung (2) abgeleitet wird, so dass der Druck des Verbrennungsgases beim Eintritt in den Verbrennungsmotor (1) konstant gehalten wird.

14. Verfahren nach Anspruch 13, **dadurch gekennzeichnet, dass** das Verbrennunsgas nahe dem Verbrennungsmotor (1) gedrosselt wird.

15. Verfahren nach Anspruch 14, **dadurch gekennzeichnet, dass** das Verbrennungsgas in Abhängigkeit von einem ermittelten Motoransaugdruck, der Drosselklappenstellung, der Drehzahl bzw. dem Drehmoment des Verbrennungsmotors (1) und/oder der zeitlichen Änderung der Drosselklappenstellung, der Drehzahl bzw. des Drehmoments gedrosselt wird.

16. Verfahren nach einem der Ansprüche 13 bis 15, **dadurch gekennzeichnet, dass** das Verbrennungas in einer einzigen Luftaufbereitungsstrecke (5) konditioniert wird, und mehreren Verbrennungsmotoren (1) zugeführt wird, wobei der Druck beim Eintritt in den jeweiligen Verbrennungsmotor (1) jeweils in Abhängigkeit von einem in der Versorgungs- bzw. Saugleitung (2) erfassten Druck unabhängig voneinander geregelt wird.

## Claims

1. An arrangement for supplying an internal combustion engine (1), which preferably is arranged on an engine test stand, with a conditioned combustion gas, in particular air, wherein a supply or suction duct (2), respectively, comprising a blower (4) is provided for supplying the combustion gas at a pre-determined temperature and with a pre-determined moisture content to the internal combustion engine (1), and a pressure sensor (20) is provided in the supply or suction duct (2), respectively, for sensing the engine suction pressure, **characterised in that** a dynamic pressure control unit (13) with an outflow valve (14, 27) is provided in the supply and/or suction duct (2) to conduct away an excess of combustion gas, the dynamic pressure control unit (13) being controlled as a function of the engine suction pressure sensed by the pressure sensor (20) such that the pressure of the combustion gas is constant at its entry into the internal combustion engine (1).

2. An arrangement according to claim 1, **characterised in that** the outflow valve (14) comprises a control piston (15) displaceably mounted in a cylinder (16) which control piston (15) seals an outflow opening (21) in the supply and/or suction duct (2) as a function of the engine suction pressure sensed.

3. An arrangement according to claim 2, **characterised in that** a pressure prevailing in a control chamber (17) and controlled as a function of the engine suction pressure sensed in the supply or suction duct (2), respectively, is admitted to a rear side of the control piston (15), and the pressure prevailing in the supply or suction duct (2), respectively, is admitted to the front side of the control piston (15).

4. An arrangement according to claim 3, **characterised in that** a pressure controller (18) is associated to the control chamber (17) which pressure controller (18) is controlled as a function of the engine suction pressure (2) sensed in the supply or suction duct, respectively.

5. An arrangement according to claim 3 or 4, **characterised in that** the control chamber (17) comprises a throttle valve (23).

6. An arrangement according to any one of claims 2 to 5, **characterised in that** a leakage flow (22) of a pressure medium, preferably air, provided in the control chamber (17) is provided between the control piston (15) and the cylinder (16).

7. An arrangement according to any one of claims 2 to 6, **characterised in that** the control piston (15) has a mass of 400 g at the most, preferably 300 g at the most.

8. An arrangement according to claim 1, **characterised in that** the dynamic pressure control unit (13) comprises a throttle element, in particular a throttle flap (24), the outflow valve (27) actuated complementarily to the throttle element being arranged upstream of the throttle element in the supply or suction duct (2), respectively.

9. An arrangement according to claim 8, **characterised in that** the throttle element comprises a throttle flap (24) capable of being actuated via a dynamic hydraulic/electric, pneumatic, magnetic and/or gravity-operated adjustment drive (25).

10. An arrangement according to claim 9, **characterised in that** for regulating the throttle flap (24) a control unit (26) is provided whose set value is determined as a function of the actual/reference value comparison of the engine suction pressure, the throttle flap position, the number of revolutions, or the torque, respectively, and/or the temporal change of the throttle flap position, the number of revolutions, or the torque, respectively.

11. An arrangement according to any one of claims 1 to 10, **characterised in that** at least two internal combustion engines (1) are connected to the supply or suction duct (2), respectively.

12. An arrangement according to claim 11, **characterised in that** each internal combustion engine (1) has an associated dynamic pressure control unit (14, 24).

13. A method for supplying an internal combustion engine (1), which preferably is arranged on an engine test stand, with a conditioned combustion gas, in particular air, wherein the combustion gas is supplied to the internal combustion engine (1) at a pre-determined temperature and with a pre-determined moisture content via a supply or suction duct (2), respectively, and wherein the pressure of the combustion gas is controlled at its entry into the internal combustion engine as a function of a pressure sensed in the supply and/or suction duct (2) **characterised in that** for a dynamic control of the pressure of the combustion gas, an excess of combustion gas is conducted away from the supply or suction duct (2), respectively, so that the pressure of the combustion gas at its entry into the internal combustion engine (1) is kept constant.

14. A method according to claim 13, **characterised in that** the combustion gas is throttled close to the internal combustion engine (1).

15. A method according to claim 14, **characterised in that** the combustion gas is throttled as a function of a determined engine suction pressure, the throttle flap position, the number of revolutions or the torque, respectively, of the internal combustion engine (1) and/or of the temporal change of the throttle flap position, the number of revolutions or the torque, respectively.

16. A method according to any one of claims 13 to 15, **characterised in that** the combustion gas is conditioned in a single air conditioning path (5) and supplied to several internal combustion engines (1), wherein the pressure at its entry into the respective internal combustion engine (1) is each controlled independently of each other as a function of a pressure sensed in the supply or suction duct (2), respectively.

## Revendications

1. Dispositif servant à l'alimentation d'un moteur à combustion (1) disposé de préférence sur un banc d'essai, avec en un gaz de combustion conditionné, en particulier de l'air, dans lequel un conduit d'alimentation ou d'aspiration (2) présentant une soufflante (4) est prévu afin d'amener au moteur à combustion (1) le gaz de combustion ayant une température prédéfinie et une teneur en humidité prédéfinie et un capteur de pression (20) servant à détecter la pression d'aspiration de moteur est prévu dans le conduit d'alimentation ou d'aspiration (2), **caractérisé en ce qu'**une unité de régulation de pression (13) dynamique comprenant une soupape de flux sortant (14, 27) servant à évacuer un excédent de gaz de combustion est prévue dans le conduit d'alimentation ou d'aspiration (2), dans lequel l'unité de régulation de pression (13) dynamique est régulée en fonction de la pression d'aspiration de moteur détectée par le capteur de pression (20) de telle manière que la pression du gaz de combustion soit constante lors de l'entrée dans le moteur à combustion (1).

2. Dispositif selon la revendication 1, **caractérisé en ce que** la soupape de flux sortant (14) présente un piston de commande (15) monté de manière à pouvoir coulisser dans un cylindre (16), lequel ferme une ouverture de flux sortant (21) en fonction de la pression d'aspiration de moteur détectée dans le conduit d'alimentation ou d'aspiration (2).

3. Dispositif selon la revendication 2, **caractérisé en ce qu'**un côté arrière du piston de commande (15) est soumis à l'action d'une pression dans une chambre de commande (17), qui est régulée en fonction de la pression d'aspiration de moteur détectée dans le conduit d'alimentation ou d'aspiration (2), et **en ce qu'**un côté avant du piston de commande (15) est soumis à l'action de la pression dans le conduit d'alimentation ou d'aspiration (2).

4. Dispositif selon la revendication 3, **caractérisé en ce qu'**est associé à la chambre de commande (17) un régulateur de pression (18), qui est régulé en fonction de la pression d'aspiration de moteur (2) détectée dans le conduit d'alimentation ou d'aspiration.

5. Dispositif selon la revendication 3 ou 4, **caractérisé en ce que** la chambre de commande (17) présente une soupape d'étranglement (23).

6. Dispositif selon l'une quelconque des revendications 2 à 5, **caractérisé en ce qu'**un courant de fuite (22) d'un milieu sous pression prévu dans la chambre de commande (17), de préférence de l'air, est prévu entre le piston de commande (15) et le cylindre (16).

7. Dispositif selon l'une quelconque des revendications 2 à 6, **caractérisé en ce que** le piston de commande (15) présente un poids de maximum 400 g, de préférence de maximum 300 g.

8. Dispositif selon la revendication 1, **caractérisé en ce que** l'unité de régulation de pression (13) dynamique présente un organe d'étranglement, en particulier un clapet d'étranglement (24), dans lequel la soupape de flux sortant (27) commandée en complément de l'organe d'étranglement est disposée dans le conduit d'alimentation ou d'aspiration (2) devant l'organe d'étranglement.

9. Dispositif selon la revendication 8, **caractérisé en ce que** l'organe d'étranglement présente un clapet d'étranglement (24) pouvant être actionné par l'intermédiaire d'un entraînement de réglage (25) dynamique hydraulique/électrique, pneumatique, magnétique et/ou fonctionnant sous l'effet de la force de gravité.

10. Dispositif selon la revendication 9, **caractérisé en ce qu'**est prévue, afin de réguler le clapet d'étranglement (24), une unité de régulation (26) dont la grandeur de réglage est définie en fonction de la comparaison entre la valeur réelle et la valeur théorique de la pression d'aspiration de moteur, du réglage de clapet d'étranglement, de la vitesse de rotation ou du couple de rotation et/ou de la variation dans le temps du réglage de clapet d'étranglement, de la vitesse de rotation ou du couple de rotation.

11. Dispositif selon l'une quelconque des revendications 1 à 10, **caractérisé en ce qu'**au moins deux moteurs à combustion (1) sont raccordés au conduit d'alimentation ou d'aspiration (2).

12. Dispositif selon la revendication 11, **caractérisé en ce qu'**une unité de régulation de pression (14, 24) dynamique est associée à chaque moteur à combustion (1).

13. Procédé servant à l'alimentation d'un moteur à combustion (1) disposé de préférence sur un banc d'essai, avec un gaz de combustion conditionné, en particulier de l'air, dans lequel le gaz de combustion ayant une température prédéfinie et une teneur en humidité prédéfinie est amené au moteur à combustion (1) par l'intermédiaire d'un conduit d'alimentation ou d'aspiration (2), et la pression du gaz de combustion est régulée lors de l'entrée dans le moteur à combustion en fonction d'une pression détectée dans le conduit d'alimentation ou d'aspiration (2), **caractérisé en ce que** l'excédent de gaz de combustion est évacué hors du conduit d'alimentation ou d'aspiration (2) afin de réguler de manière dynamique la pression du gaz de combustion de sorte que la pression du gaz de combustion soit maintenue à un niveau constant lors de l'entrée dans le moteur à combustion (1).

14. Procédé selon la revendication 13, **caractérisé en ce que** le gaz de combustion est étranglé à proximité du moteur à combustion (1).

15. Procédé selon la revendication 14, **caractérisé en ce que** le gaz de combustion est étranglé en fonction d'une pression d'aspiration de moteur déterminée, du réglage de clapet d'étranglement, de la vitesse de rotation ou du couple de rotation du moteur à combustion (1) et/ou en fonction de la variation dans le temps du réglage de clapet d'étranglement, de la vitesse de rotation ou du couple de rotation.

16. Procédé selon l'une quelconque des revendications 13 à 15, **caractérisé en ce que** le gaz de combustion est conditionné dans une ligne de préparation d'air (5) unique et est amené à plusieurs moteurs à combustion (1), dans lequel les pressions respectives sont régulées en fonction les unes des autres, lors de l'entrée dans le moteur à combustion (1) respectif, respectivement en fonction d'une pression détectée dans le conduit d'alimentation ou d'aspiration (2).
